# EUROPEAN PATENT APPLICATION

(11) **EP 1 939 725 A2**
(43) Date of publication of application: **02.07.2008**
(21) Application number: 07254918.1
(22) Date of filing: 18.12.2007
(51) Int. Cl.: G06F 3/14, G09G 5/00

(54) **Driving multiple display interfaces with a single operator application**

(30) Priority: 29.12.2006 US 877838 P; 31.10.2007 US 981285
(71) Applicant: NCR Corporation, Dayton, Ohio 45479 (US)
(72) Inventor: Rossmann, Wolf D., Forgar Angus DD8 1UN (GB); Monaghan, Andrew D., Dundee DD2 1DS (GB)
(74) Representative: Williamson, Brian

(57) **Abstract**

A self-service terminal (SST) interacts with a human operator by accessing one or more documents that include: (1) text-based content formatted for display on a text-only display device, and (2) instructions for rendering the text-based content with graphical enhancements on a multimedia display device. The SST uses the instructions in the one or more documents to render the text-based content with graphical enhancements on a multimedia display device.

## Description

Self-service terminals (SSTs), such as automated teller machines (ATMs) used in the banking industry or self-service kiosks used in the airline and fast-food industries, are becoming increasingly common in all areas of commerce all over the world. Many SSTs, particularly in the ATM industry, have two separate visual displays that allow the SST to interact with human users - one on the "front" side of the SST (a "front panel display") that allows a customer of the business entity that owns the SST to engage in a self-service transaction with the business entity, and one on the "rear" side of the SST (a "rear panel display") that allows service personnel employed by the business entity to service the SST.

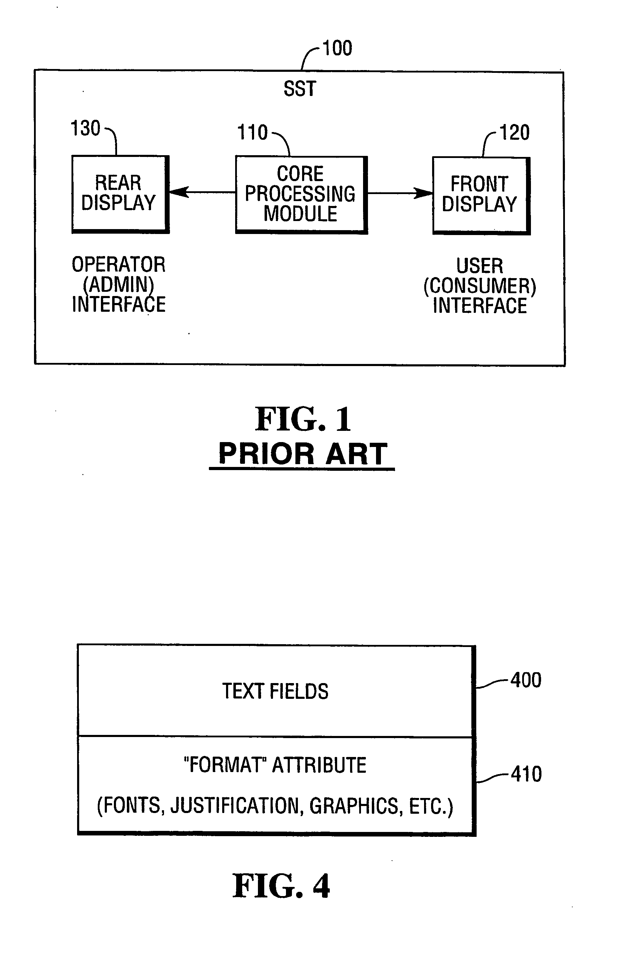

FIG. 1 shows such a system. The SST 100 includes, among other components, a core processing module 110 that provides (1) a "user interface" on a front panel display 120 to allow interaction with a customer of the business entity that owns or manages the SST (where the customer is the "user" of the SST) and (1) an "operator interface" on a rear panel display 120 to allow interaction with service personnel employed by the business entity (where the service personnel is the "operator" of the SST).

In general, in an SST having both front and rear panel displays like those in FIG. 1, the front panel display allows for presentation of more complex and data-rich information than the rear panel display allows. The front panel display typically is able to display information in multimedia format (e.g., text combined with images, graphics, motion), while the rear panel display is able to display text only. What's more, in an SST for use in the financial services industry, the operator application that drives the SST's interaction with an operator through the rear panel display must comply with the CEN/XFS standard for Text Terminal Units (TTUs), which defines a standard format for operator interactions with SSTs, while the operator application that drives interaction with an operator through the front panel display need not comply with the CEN/XFS standard. Up to now, the CEN/XFS standard for TTUs has not supported enhanced multimedia functionality or graphically rich displays and thus has required the development of separate operator applications for standard TTU interfaces and for multimedia interfaces.

In particular, the CEN/XFS standard contemplates text-only displays and thus provides only for delivery of text-based TTU "forms" or raw text data. TTU forms are made up of a series of "fields" that each contains a text item along with instructions for displaying the text item at a certain position on a TTU display. The operator application that drives interaction with an operator through a TTU display reads data from an appropriate TTU form, renders text on the TTU display according to the instructions contained in the form, receives input from the operator in reply to the displayed text, and performs some action in response to the operator's input, typically accessing another TTU form and presenting a new textual display to the operator in doing so. A renderer interface module in the operator application serves to read and interpret the TTU forms and, in turn, to interpret the input received from the operator.

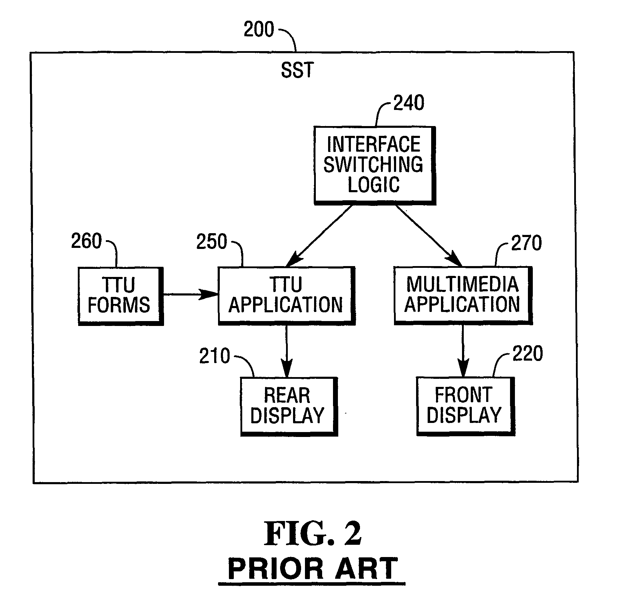

FIG. 2 shows a traditional SST 200 configured to allow operator interaction on both a front panel display 210 with multimedia capabilities and a rear panel display 220 that complies with the TTU standard. The SST 200 includes interface switching logic 240 that allows the operator (or the SST) to select which of the displays to use and includes two separate operator applications - a TTU operator application 250 and a multimedia operator application 270 - to drive the operator's interaction with the SST through the displays.

If the operator or the SST selects the rear panel display 220 for use in the interaction between the operator and the SST, the interface switching logic 240 invokes the TTU operator application 250 to drive the operator interaction. In driving the interaction, the TTU operator application 250 accesses a set of TTU forms 260 that comply with the CEN/XFS TTU standard and delivers text-based screens to the rear panel display 220 accordingly. The TTU operator application includes the renderer interface module that interprets both the TTU forms and the input received from the operator in reply to text displayed on the rear panel display 220.

If the operator or the SST selects the front panel display 210 for the operator interaction, the interface switching application 240 invokes the multimedia operator application 270 to drive the interaction. In a traditional SST, the multimedia operator application 270 need not comply with the CEN/XFS standard as it is custom-designed by or for the business entity to allow operator interaction through the front panel display 210.

It is important to note that, for operator interaction with both front panel and rear panel displays in a traditional SST, the SST 200 must support two separate operator applications - one that complies with the CEN/XFS standard and one that does not. Both of these operator applications include both the business logic that drives the flow of information to the operator and the display-interface logic that drives the display of this information through the selected display device. Therefore, if the business entity that owns or manages the SST wants to modify the business logic that governs the flow of the operator's interaction with the SST, it must modify two separate operator applications, one for each of the display devices, and reinstall both applications on the SST.

Described below is a system that is designed to separate (a) the business logic that is used to govern the flow of information to an operator who is interacting with the system from (b) the interface logic that drives the delivery of this information to the operator through either a text-based display device or a multimedia display device. One such system includes a self-service terminal (SST) that interacts with a human operator by accessing one or more documents that include: (1) text-based content formatted for display on a text-only display device, and (2) instructions for rendering the text-based content with graphical enhancements on multimedia display device. The SST uses the instructions in the one or more documents to render the text-based content with graphical enhancements on a multimedia display device.

Embodiments of the present invention will now be described, by way of example, with reference to the accompanying drawings, in which:
FIGS. 1 and 2 are diagrams showing traditional self-service terminals (SSTs).
FIG. 3 is a diagram showing an SST with separate operator (business logic) and renderer (display-interface logic) applications.
FIG. 4 is a diagram showing an extension to the CEN/XFS TTU standard that is useful in implementing an SST like that of FIG. 3.
FIG. 5 is a diagram showing a computer system suitable for use in implementing an SST like that of FIG. 3.

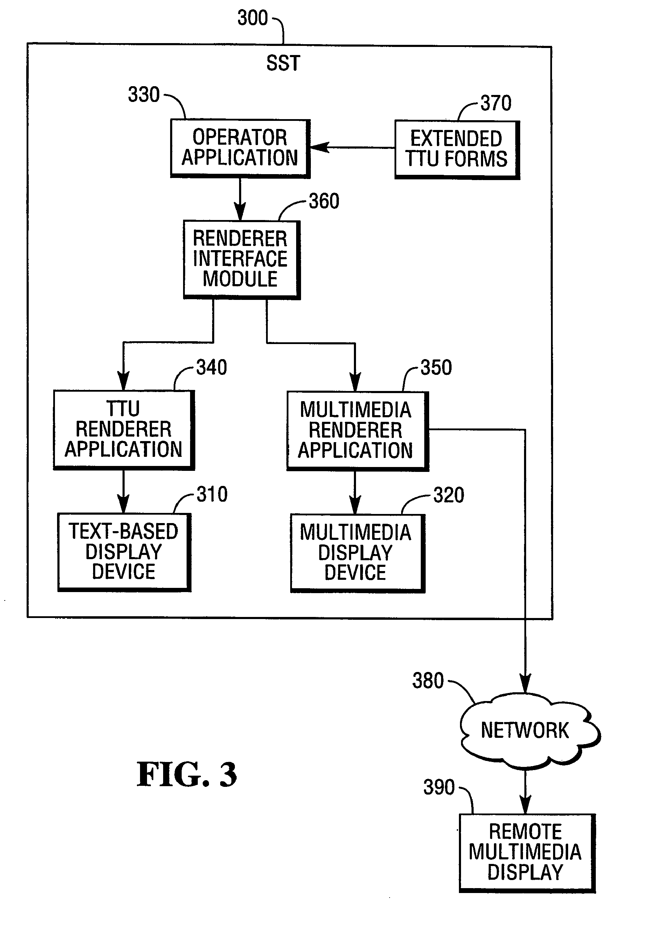

FIG. 3 shows an SST 300 designed to separate (a) the business logic that is used to govern the flow of information to an operator who is interacting with the SST 300 from (b) the interface logic that drives the delivery of this information to the operator through either a text-based display device 310 (e.g., a rear panel display) or a multimedia display device 320 (e.g., a front panel display). In particular, the SST 300 includes an operator application 330, in which the business logic resides, and separate renderer applications - a TTU renderer application 340 and a multimedia renderer application 350 - in which the display-interface logic resides.

One technique that allows for separation of the business logic and the display-interface logic in this manner involves an extension of the CEN/XFS standard for TTU forms. As described above and as shown in FIG. 4, the CEN/XFS standard contemplates text-only displays and thus provides for delivery of text-based TTU forms that are made up of a series of text fields 400 containing text items, along with instructions for displaying the text items at certain positions on the TTU display. The CEN/XFS standard does provide, however, for a "format" field, the content of which is not defined by the standard but can contain any information to be interpreted by the display devices as formatting information. The SST 300 shown here extends the CEN/XFS standard by using this free field to define a "format" attribute 410 for each of the TTU forms, where the "format" attribute includes instructions for displaying much richer content - e.g., custom fonts, colors and animations for the text found in the fields of the TTU forms, as well as other multimedia items such as images and video clips - on the multimedia display device 320.

By using this free field to add "format" extensions to TTU forms, the SST 300 is able to store a set of extended TTU forms 370 that are used in rendering data at both the text-based and multimedia displays. A renderer interface module 360 sits between the operator application 330 and the TTU and multimedia renderer applications 340, 350 and interprets the extended TTU forms 370 as required to deliver the necessary content for display at the selected display device. The renderer interface module 360 also contains switching logic that allows the operator or the SST 300 to select which of the displays to use during the operator's interaction with the SST 300.

As the operator application 330 drives the SST's interaction with an operator through one of the display devices, the operator application 330 accesses the extended TTU forms 370 as necessary and delivers an appropriate one of the forms to the renderer interface module 360. The renderer interface module 360 in turn reads and interprets the extended TTU forms and delivers the necessary information to the selected display device for use in displaying the form to the operator. If the operator or the SST has selected the text-based display device 310 for use in the operator interaction, the renderer interface module 360 ignores the "format" attribute in each of the forms and delivers the text-only portion of the form to the TTU renderer application 340. If, on the other hand, the operator or the SST has selected the multimedia display device 320, the renderer interface application 360 reads and interprets the "format" attribute of each form along with the data stored in the text fields and delivers any necessary formatting instructions to the multimedia renderer application 350. The multimedia renderer application 350 in turn interprets the formatting instructions provided by the renderer interface module 360 and applies these instructions accordingly to create a multimedia display on the multimedia display device 320.

Alternatively, in some systems, the renderer interface module 360 ignores the "format" attribute altogether and simply passes the instructions it contains to the appropriate renderer application. In systems configured in this manner, the TTU renderer application 340 ignores the formatting instructions, whereas the multimedia renderer application 350 interprets the instructions to display rich multimedia content. The renderer interface module 360 in this case provides a common interface for the operator application 330 to each of the renderer applications.

In some systems, the SST 300 is configured to deliver multimedia content not only to the multimedia display device 320 in the SST 300, but also to one or more multimedia display devices 380 that do not belong to the SST 300, such as a personal digital assistant (PDA) device carried by the operator. In these systems, the multimedia renderer application 350 delivers the multimedia content to the remote multimedia display device 380 through a network 390 or by some other remote communication mechanism, such as a radio frequency (RF) or infrared (IR) signal delivered directly to the remote device. Likewise, the SST 300 is configured in some instances to deliver multimedia content to a variety of display devices with different input and output characteristics (e.g., touch screens displays vs. displays that rely on keyboards for input) by providing a renderer application for each device with no changes necessary to the operator application.

Unlike the traditional systems described in connection with FIGS. 1 and 2 above, the SST 300 of FIG. 3 includes a single operator application 330 that drives the flow of an operator's interaction with the SST 300, regardless of which display device the operator or SST selects for use during the operator's interaction. A result is that the business entity who owns or manages the SST 300 is required to maintain only one operator application for the SST and, when modifying or replacing that application, can do so by replacing only one file on the SST 300.

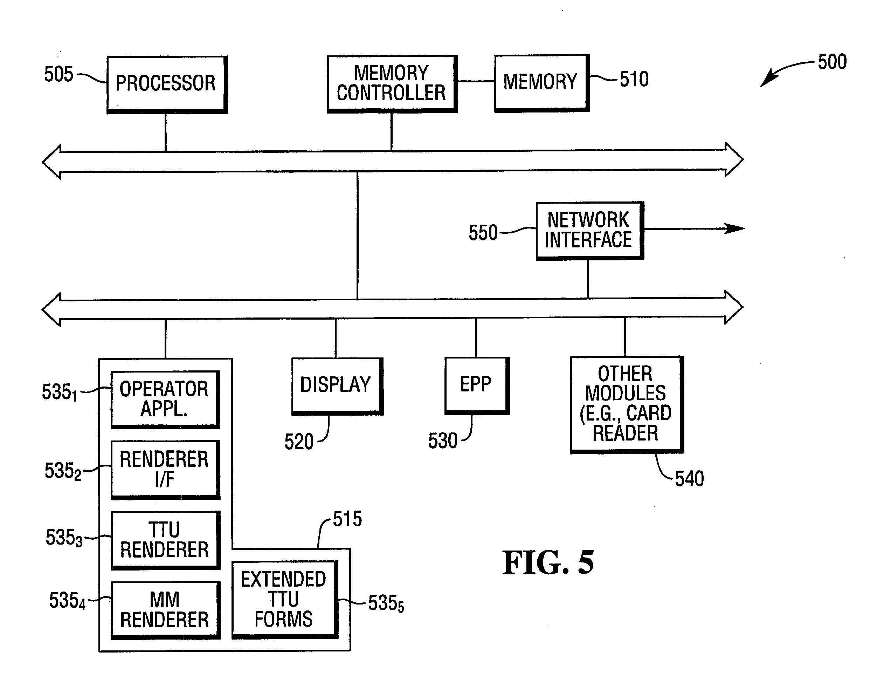

FIG. 5 shows a general-purpose computer system 500 suited for use in implementing a self-service terminal (SST) like those described above. In this example, the SST is configured to serve as an automated teller machine (ATM) for use in conducting financial-services transactions. In general, the system 500 includes one or more processors 505, one or more temporary data-storage components 510 (e.g., volatile and nonvolatile memory modules), and one or more persistent data-storage components 515 (e.g., optical and magnetic storage devices, such as hard and floppy disk drives, CD-ROM drives, and magnetic tape drives). The system 500 also includes one or more input devices, such as an encrypted PIN pad (EPP) module 530, and one or more output devices, such as a display module 520. The system 500 also typically includes many other modules 540 for use in conducting self-service transactions, such as a card reader, a cash dispenser, and a receipt printer, as well as a network interface module 550 that allows the SST to communicate with other devices through one or more networks.

The system 500 includes a variety of files 535₁₋₅ stored in the persistent storage media 515. These files include an operator application 535₁, a renderer interface module 535₂, a TTU renderer application 535₃, a multimedia renderer application 535₄, and extended TTU forms 535₅ like those described above. Some of these files, such as the operator application 535₁, include executable program code that is read from the persistent storage media 515 and copied into memory 510 at run-time. The processor 505 executes this executable program code by retrieving program instructions from memory in a prescribed order. Other files, such as the extended TTU forms 535₃, do not include executable program code, but rather take the form of documents that store information (or data) according to some prescribed format.

The text above describes one or more specific embodiments of a broader invention. The invention also is carried out in a variety of alternative embodiments and thus is not limited to those described here. Many other embodiments are also within the scope of the following claims.

## Claims

1. A method for use in a self-service terminal in interacting with a human operator of the self-service terminal, the method comprising:
accessing one or more documents that include:
text-based content formatted for display on a text-only display device; and
instructions for rendering the text-based content with graphical enhancements on multimedia display device; and
using the instructions in the one or more documents to render the text-based content with graphical enhancements on a multimedia display device.

2. The method of claim 1, where accessing the one or more documents includes accessing TTU-compliant documents that include text-based content in compliance with the CEN/XFS TTU standard.

3. The method of claim 2, where accessing the TTU-compliant documents includes accessing documents that have at least one field of information dedicated to storing the instructions for rendering the text-based content on a multimedia display device.

4. The method of any preceding claim, where using the instructions to render the text-based content on a multimedia display device includes invoking a renderer interface module to extract the instructions from the one or more documents.

5. The method of claim 4, where using the instructions to render the text-based content on a multimedia display device includes delivering the instructions along with the text-based content from the renderer interface to a multimedia renderer module that drives operation of a multimedia display device.

6. The method of any preceding claim, where accessing the one or more documents includes invoking an operator application that includes business logic which, when executed by the self-service terminal, governs operational flow of the self-service terminal in interacting with the human operator.

7. The method of claim 6, where using the instructions to render the text-based content on a multimedia display device includes invoking a renderer interface module configured to receive the one or more documents from the operator application and extract the instructions from the documents.

8. A self-service terminal for use in allowing human users to conduct self-service transactions with one or more business entities, the self-service terminal comprising:
a multimedia display device configured for presentation of information to the human users in an enhanced graphical format;
a text-only display device configured for presentation of information in a text-only format to a human operator who maintains the self-service terminal;
an operator interface module configured to drive operational flow of the self-service terminal as it interacts with the human operator and, in doing so, to access one or more documents that include:
text-based content formatted for display on the text-only display device; and
instructions for rendering the text-based content with graphical enhancements on the multimedia display device; and
a renderer interface module configured to receive the one or more documents from the operator application and extract the instructions from the documents for use in rendering the text-based content with graphical enhancements on the multimedia display device.

9. The terminal of claim 8, further comprising two renderer modules, including:
a text-only renderer module configured to receive the text-based content from the renderer interface module when the text-only display device is selected for interaction with the human operator; and
a multimedia renderer module configured to receive from the renderer interface module both the text-based content and the instructions for rendering the text-based content on the multimedia display device when the multimedia display device is selected for interaction with the human operator.

10. The terminal of claim 8 or claim 9, where the one or more documents comprise TTU-compliant documents that include text-based content in compliance with the CEN/XFS TTU standard.

11. The terminal of claim 10, where the TTU-compliant documents comprise documents that have at least one field of information dedicated to storing the instructions for rendering the text-based content on the multimedia display device.
